# EUROPEAN PATENT APPLICATION

(11) **EP 1 048 207 A1**
(43) Date of publication of application: **02.11.2000**
(21) Application number: 00201566.7
(22) Date of filing: 28.04.2000
(51) Int. Cl.: A01K 5/02

(54) **Pulp feed machine**

(30) Priority: 28.04.1999 NL 1011913
(71) Applicant: Groba Voedersystemen B.V., 6604 CR Wijchen (NL)
(72) Inventor: de Groot, Adrianus Wilhelmus Johannes, 6613 AG Balgoy (NL); de Groot, Cornelis Jozef Johannes, 6613 AS Balgoy (NL)
(74) Representative: Prins, Hendrik Willem

(57) **Abstract**

The invention relates to a device for feeding pulp to animals, comprising:
a supply tank (3) for accommodating the pulp (15), wherein the supply tank (3) comprises a feed opening (6) for airtight supply of pulp (15) to the tank (3);
a closable discharge opening (7) arranged on the underside of the tank (3);
a closable venting aperture (11) arranged on the upper side of the tank (3);
a feed trough (4) placed under the supply tank (3), and
a pipe (14) arranged on the discharge opening (7) which extends into the feed trough (4).

## Description

The invention relates to a device for feeding pulp to animals, comprising:
a supply tank for accommodating the pulp, wherein the supply tank comprises a feed opening for airtight supply of pulp to the tank;
a closable discharge opening arranged on the underside of the tank; and
a closable venting aperture arranged on the upper side of the tank;
a feed trough placed under the supply tank, and
a pipe arranged on the discharge opening which extends into the feed trough.

When a number of animals are housed in one pen, it is desirable to give the animals a measured quantity of feed. In the case of dry feed, for instance in the form of granules, it is known to pour a measured quantity of feed into a supply chamber, whereafter each animal can eat according to its needs. The feed trough is herein filled with a portion by the animal actuating a handle with its snout.

With determined types of animal, such as pigs, it is preferred to feed liquid feed in the form of a pulp. It is usual to pour the pulp into a long trough and to fill this a number of times per day. This manner of feeding is particularly attractive since use can be made of rest products from the food processing industry and the like. It is important that the pulp not be exposed to the air. The feed can hereby not perish and/or fungal growth cannot occur. The feed is furthermore not affected by influences in the stall house, for instance insects, dust and the like.

Another drawback of pulp is that when it is stored in a supply tank, the solid parts of the pulp separate from the water. The animal which eats first after the filling of the feed device will hereby receive more solid feed for instance than an animal which eats later.

The above stated drawbacks are prevented by a device according to the invention.

Because the pipe extends into the feed trough and the supply tank can be sealed in completely airtight manner, the feed trough will not overflow with pulp but will be filled up to a determined level. When an animal eats a determined quantity of pulp from the trough, the outlet opening of the pipe will come out above the level of the pulp, whereby an air bubble can flow through the pipe into the supply tank. This air bubble provides a mixing of the pulp in the supply tank and the air which has entered the supply tank makes it possible for a quantity of pulp to flow once again into the feed trough. A well mixed quantity of pulp provided with sufficient moisture is hereby always present in the feed trough.

In a preferred embodiment the feed opening is closable. Hereby is ensured that the supply tank is sealed completely airtightly and air entering through the pipe cannot enter another device via a feed conduit.

According to a further embodiment according to the invention the venting aperture is closable by a valve, which valve can be operated by a cylinder. This cylinder can be a hydraulic or a pneumatic cylinder. The venting aperture can hereby be opened by a control. This control can further control the supply of pulp.

In a further preferred embodiment the discharge opening is closable by a valve, which valve can likewise be operated by a hydraulic or pneumatic cylinder. It is hereby possible in combination with a venting aperture which can be operated by a cylinder to fully control the device with a control.

In another embodiment the venting aperture is closable by an overpressure-relief valve. When pulp is pumped into the supply tank, the pulp will place the air in the supply tank under pressure, whereby the venting valve will be opened and the air in the tank can escape.

The invention further relates to a method for feeding pulp to animals with a device comprising a supply tank for accommodating the pulp, wherein the supply tank comprises a feed opening for airtight supply of pulp to the tank, a closable discharge opening arranged on the underside of the tank and a closable venting aperture arranged on the upper side of the tank, a feed trough placed under the supply tank, and a pipe arranged on the discharge opening which extends into the feed trough, which method comprises the following steps of:
- closing the discharge opening;
- opening the venting aperture;
- filling the supply tank with pulp via the feed opening;
- closing the venting aperture; and
- opening the discharge opening;
so that pulp flows through the pipe into the feed trough until the outlet opening of the pipe comes below the level of the pulp in the feed trough.

These and other features of the invention will be further elucidated with reference to the accompanying drawings.

Figure 1 shows a perspective view in cross-section of a preferred embodiment of the device according to the invention.

Figure 2 shows a perspective view of a second embodiment according to the invention.

Figure 3 shows a perspective view in cross-section of a third embodiment according to the invention.

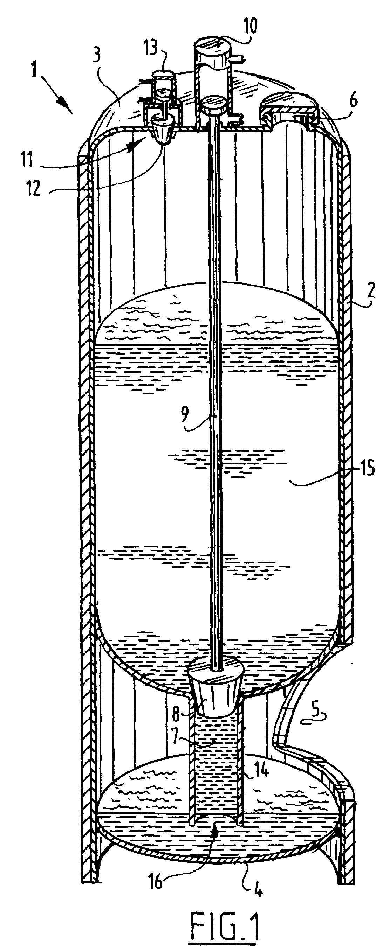

Figure 1 shows the device which comprises a tubular housing 2, in which housing 2 are arranged a supply tank 3 and a feed trough 4. Provided in housing 2 is an opening 5 through which the animals can reach feed trough 4.

Supply tank 3 has a feed opening 6 onto connects a feed conduit for pulp. Supply tank 3 further has a discharge opening 7 which can be closed with a plug 8. Plug 8 is connected by means of a rod 9 to a cylinder 10. Cylinder 10 is preferably driven by compressed air.

Supply tank 3 moreover has a venting aperture 11 which is closable with a plug 12 and which plug 12 is operated by a cylinder 13.

Connecting onto discharge opening 7 is a pipe 14 which extends into feed trough 4.

The device operates as follows. Discharge opening 7 is first of all closed by plug 8. Venting aperture 11 is then opened by cylinder 13. Pulp 15 is thereafter pumped into supply tank 3 via feed opening 6. When a desired quantity of pulp 15 is present in supply tank 3, the supply is stopped, venting aperture 11 is closed and, finally, discharge opening 7 is opened by cylinder 10. Pulp 15 will now flow through pipe 14 into feed trough 4. As soon as outlet opening 16 of pipe 14 is situated below the level of the pulp in feed trough 4 the pulp flow will stop owing to the underpressure which forms in supply tank 3.

When an animal eats from pulp 15, the level in feed trough 4 will fall, so that outlet opening 16 once again comes out above the pulp level. It is hereby possible for an air bubble to enter supply tank 3 through outlet opening 16 via pipe 14. The underpressure in the supply tank is hereby reduced whereby pulp 15 flows into feed trough 4, until outlet opening 16 is once again situated below the pulp level.

The air bubbles ensure a good mixing of the pulp in supply tank 3. Thus is prevented that the heavy parts of the pulp come to lie at the bottom of the supply tank and the lighter parts at the top, whereby the pulp portions are not of equal quality.

It is possible to provide venting aperture 11 with an overpressure-relief valve, which valve is opened by the overpressure in supply tank 3 during the filling thereof.

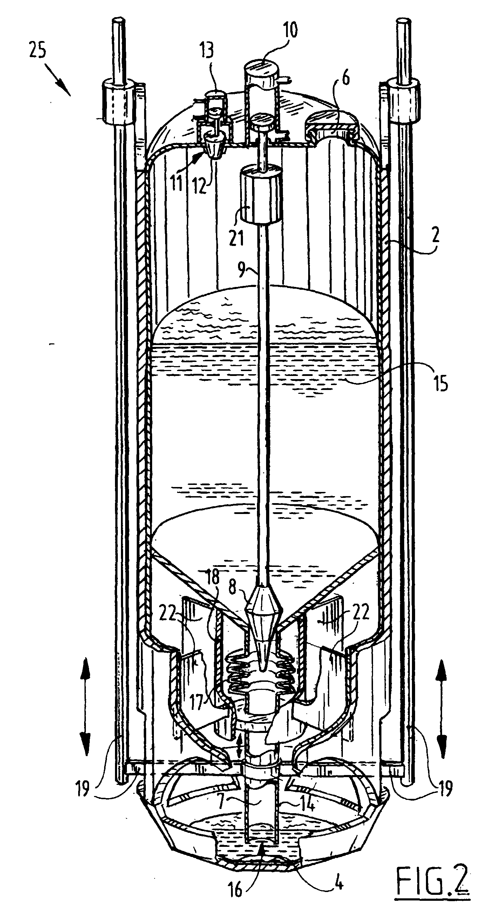

Figure 2 shows a second embodiment of the device according to the invention. A large number of the components of this device 25 correspond with those of the device according to figure 1, wherein corresponding components are designated with corresponding reference numerals.

Arranged on rod 9 is a float 21 which forms a safety precaution. If too much pulp feed 15 is pumped into supply tank 3, float 21 will then move upward and remove plug 8 from discharge opening 7, whereby the excess pulp feed is drained.

Pipe 14 further comprises a rubber bellows 17, whereby the length of pipe 14 is adjustable. For protection of rubber bellows 17 a cylindrical part is arranged therearound which is fixed to the housing with fixing plates 22. The length of pipe 14 can be adjusted by operating the bracket 19 mounted thereon. If it is wished to for instance dose the supply of pulp over a longer time duration, adjustable pipe 14 can thus be set to a low outflow level, whereby there is a small outflow of pulp and the pigs require more time to consume the necessary portion of feed. By adjusting the length of pipe 14 the device 25 can also be set to a so-called zero position. Outlet opening 16 of pipe 14 herein lies against the bottom of feed trough 4 and no pulp can flow out.

The device can further be provided with an additional closable opening, in order for instance to clean the interior of the device with a high-pressure cleaner.

As can be seen in the figures, the device can be made suitable for a number of feeding locations by arranging a corresponding number of openings 5.

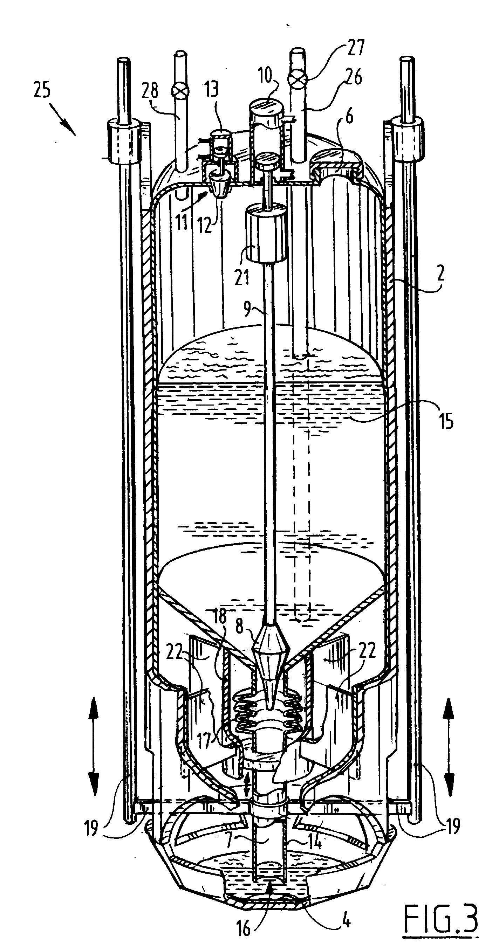

The embodiment shown in figure 3 largely corresponds with the embodiment shown in figure 2 and the same components are designated with the same reference numerals and are not further explained below. A closable vacuum pipe 28 is arranged on the top of supply tank 3. A pipe 26 is further arranged which extends into pulp 15 as far as plug 8. This pipe 26 is also closable by a valve 27 and is connectable to the ambient air.

In order to enable additional mixing of pulp 15 in supply tank 3, air is extracted from the supply tank via vacuum pipe 28. By now opening valve 27 with the plug 8 closed, air will flow into the pulp via pipe 26 in order to release the generated vacuum. The pulp mass 15 is hereby additionally mixed.

## Claims

1. Device for feeding pulp to animals, comprising:
a supply tank for accommodating the pulp, wherein the supply tank comprises a feed opening for airtight supply of pulp to the tank;
a closable discharge opening arranged on the underside of the tank; and
a closable venting aperture arranged on the upper side of the tank;
a feed trough placed under the supply tank, and
a pipe arranged on the discharge opening which extends into the feed trough.

2. Device as claimed in claim 1, wherein the feed opening is closable.

3. Device as claimed in claim 1, wherein the venting aperture is closable by a valve, which valve can be operated by a cylinder.

4. Device as claimed in claim 1, wherein the discharge opening is closable by a valve, which valve can be operated by a cylinder.

5. Device as claimed in claim 1, wherein the venting aperture is closable by an overpressure-relief valve.

6. Device as claimed in claim 1, wherein the pipe is adjustable in length.

7. Device as claimed in claim 1, comprising a closable vacuum pipe which is in communication with the supply tank, and a closable air feed pipe which extends to the bottom of the supply tank.

8. Method for feeding pulp to animals with a device comprising a supply tank for accommodating the pulp, wherein the supply tank comprises a feed opening for airtight supply of pulp to the tank, a closable discharge opening arranged on the underside of the tank and a closable venting aperture arranged on the upper side of the tank, a feed trough placed under the supply tank, and a pipe arranged on the discharge opening which extends into the feed trough, which method comprises the following steps of:
- closing the discharge opening;
- opening the venting aperture;
- filling the supply tank with pulp via the feed opening;
- closing the venting aperture; and
- opening the discharge opening;
so that pulp flows through the pipe into the feed trough until the outlet opening of the pipe comes below the level of the pulp in the feed trough.
